(19) Europäisches Patentamt
European Patent Office
Office européen des brevets

(11) **EP 4 331 820 A1**

(12) **EUROPEAN PATENT APPLICATION**
published in accordance with Art. 153(4) EPC

(43) Date of publication:
**06.03.2024 Bulletin 2024/10**

(21) Application number: **22795720.6**

(22) Date of filing: **25.04.2022**

(51) International Patent Classification (IPC):
**B29D 29/10** (2006.01)     **B33Y 80/00** (2015.01)
**B29C 64/153** (2017.01)     **B33Y 70/00** (2020.01)

(52) Cooperative Patent Classification (CPC):
**B29C 64/153; B29D 29/10; B33Y 70/00;
B33Y 80/00**

(86) International application number:
**PCT/JP2022/018723**

(87) International publication number:
**WO 2022/230807 (03.11.2022 Gazette 2022/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.04.2021 JP 2021076323**

(71) Applicant: **Mitsubishi Chemical Corporation
Chiyoda-ku
Tokyo 100-8251 (JP)**

(72) Inventors:
• **YAMASUE, Nao
Tokyo 100-8251 (JP)**
• **KISHISHITA, Minoru
Tokyo 100-8251 (JP)**

(74) Representative: **TBK
Bavariaring 4-6
80336 München (DE)**

(54) **POWDER FOR POWDER LAMINATION MOLDING**

(57) A powder containing a resin composition for powder additive manufacturing, wherein the resin composition includes an aromatic polyester-based resin; and a 50% impact brittleness temperature of the resin composition measured by the brittleness temperature test described in JIS K7216 at a holding time of 3 minutes, a temperature ticking interval of 5°C, and a temperature range of -70°C to 25° is in a range of -45°C or higher and 10°C or lower.

EP 4 331 820 A1

**Description**

Technical Field

The present invention relates to a powder for powder additive manufacturing that contains an aromatic polyester. In particular, the present invention relates to a powder for powder additive manufacturing, which is excellent in powder layer formability when a three-dimensional modeled article is formed by a powder additive manufacturing apparatus. The present invention also relates to a resin composition suitable for this powder for powder additive manufacturing, and a three-dimensional modeled article using this powder for powder additive manufacturing.

Background Art

Three-dimensional printers (hereinafter sometimes referred to as "3D printers") of various additive manufacturing methods (e.g., Binder Jetting , Material extrusion, Vat Photopolymerization method, etc.) have been on the market.

Among these, a 3D printer system based on the powder additive manufacturing method (Powder Bed Fusion), for example, a system manufactured by 3D Systems in the United States, has been used to construct 3D objects in layers based on computer-aided design (CAD) models by heating and melting a thin layer (powder bed) of powder materials such as a resin to a temperature near the melting point of the resin powder using a high-power $CO_2$ laser or other heating means.

A laser used as a heating means scans a cross-section in the X-Y direction on the surface of the powder bed to selectively melt the powder material. From 3D CAD data, the 3D modeled article can be obtained by layering one layer at a time and repeating the process to form a stacked object. This system does not require the use of a mold, and various resin powders can be used as raw materials as long as they have a certain degree of heat resistance, and the resulting molded article are highly reliable. For this reason, this system is a technology that has been attracting attention in recent years.

Polyamide resins such as nylon 12 and nylon 11 are widely used as the material of the thermoplastic resin powder for the powder additive manufacturing method. In recent years, polybutylene terephthalate-based resins have also been used as aromatic polyester-based resins that are less likely to absorb moisture than nylon 12 and nylon 11 and can provide molded articles with high heat resistance.

Methods for producing thermoplastic resin powder include melt granulation, in which a resin composition melted near its melting point is made into fibers and then cut (Patent Literature 1), and pulverization, in which a resin material consisting of a resin composition is cut or broken by applying impact or shear. Examples of pulverizing means include stamp mills, ring mills, mill stones, mortars, roller mills, jet mills, high-speed rotating mills, hammer mills, pin mills, container-driven mills, disk mills, media agitating mills, and the like.

[Patent Literature 1] Japanese Patent No. 6399165

As a pulverization method, there is low-temperature pulverization in which the resin temperature during pulverization is lowered by cooling the inside powder system using a low-temperature liquefied gas such as liquid nitrogen, in order to prevent stretching of the resin material due to shear heat generation during pulverization. By using low-temperature pulverization, it becomes possible to pulverize elastic materials such as rubber, which are difficult to pulverize at room temperature.

However, even if low-temperature pulverization is used, the pulverizability varies depending on the composition and molecular weight of the thermoplastic resin to be pulverized, and it is not possible to obtain a powder with the desired particle size.

On the other hand, in the powder additive manufacturing method, the powder used is required to be excellent in layer formability (spreadability) and printability (three-dimensional modeling accuracy and surface roughness) due to its printing principle. For this purpose, a certain average particle size and particle size distribution are required, so the thermoplastic resin to be pulverized must have excellent pulverizability.

Summary of Invention

The present invention provides a powder containing an aromatic polyester-based resin for powder additive manufacturing, which is produced with excellent pulverizability in low-temperature pulverization using liquid nitrogen, etc., while maintaining the thermal properties of the aromatic polyester-based resin, and which has excellent printability during powder additive manufacturing.

The inventors have found that these problems can be solved by using an aromatic polyester-based resin with specific requirements.

The gist of the present invention is as follows.

[1] A powder containing a resin composition for powder additive manufacturing,

wherein the resin composition comprises an aromatic polyester-based resin; and
a 50% impact brittleness temperature of the resin composition measured by the brittleness temperature test described in JIS K7216 at a holding time of 3 minutes, a temperature ticking interval of 5°C, and a temperature range of -70°C to 25° is in a range of -45°C or higher and 10°C or lower.

[2] The powder for powder additive manufacturing according to [1], wherein the resin composition has a melting peak half width in a DSC chart more than 10°C.

[3] The powder for powder additive manufacturing according to [1] or [2], wherein an amount of terminal carboxyl groups of the resin composition is 10 to 40 equivalents/ton.

[4] The powder for powder additive manufacturing according to any one of [1] to [3], wherein the resin composition has a glass transition temperature (Tg) of 20°C or higher and lower than 44°C.

[5] The powder for powder additive manufacturing according to any one of [1] to [4], wherein the powder contains inorganic particles.

[6] The powder for powder additive manufacturing according to any one of [1] to [5], wherein a particle size distribution D50 of the powder is 20 $\mu$m or more and 100 $\mu$m or less.

[7] The powder for powder additive manufacturing according to any one of [1] to [6], wherein the powder has a compression degree calculated by the following formula (III) of 25% or less;

$$\text{Compression degree (\%)} = (\text{packed bulk density} - \text{aerated bulk density}) \, / \, \text{packed bulk density} \times 100 \quad ... \text{(III)}$$

wherein, in the formula (III), the aerated bulk density is a bulk density before compression, and the packed bulk density is a bulk density after compression at a stroke height of 18 mm and 180 tapping cycles.

[8] The powder for additive manufacturing according to any one of [1] to [7], wherein the resin composition has a crystal melting temperature (Tm) of 200°C or lower.

[9] The powder for powder additive manufacturing according to any one of [1] to [8], wherein the aromatic polyester-based resin has a structure derived from 1,4-butanediol.

[10] The powder for powder additive manufacturing according to [9], wherein the aromatic polyester-based resin includes a structural unit derived from a terephthalic acid component, a structural unit derived from 1,4-butanediol, and at least one other structural units.

[11] A three-dimensional modeled article printed using the powder for powder additive manufacturing according to any one of [1] to [10].

[12] A resin composition containing an aromatic polyester-based resin;
wherein a 50% impact brittleness temperature of the resin composition measured by the brittleness temperature test described in JIS K7216 at a holding time of 3 minutes, a temperature ticking interval of 5°C, and a temperature range of -70°C to 25° is in a range of -45°C or higher and 10°C or lower.

[13] The resin composition according to [12], wherein the resin composition has a resin composition has a melting peak half width in a DSC chart more than 10°C.

[14] The resin composition according to [12] or [13], wherein an amount of terminal carboxyl groups of the resin composition is 10 to 40 equivalents/ton.

[15] The resin composition according to any one of [12] to [14], wherein the resin composition has a glass transition temperature (Tg) of 20°C or higher and lower than 44°C.

[16] The resin composition according to any one of [12] to [15], wherein the resin composition has a crystal melting temperature (Tm) of 200°C or lower.

[17] The resin composition according to any one of [12] to [16], wherein the aromatic polyester-based resin has a structure derived from 1,4-butanediol.

[18] The resin composition according to [17], wherein the aromatic polyester-based resin includes a structural unit derived from a terephthalic acid component, a structural unit derived from 1,4-butanediol, and at least one other structural units.

Advantageous Effects of Invention

According to the present invention, it is possible to provide a powder containing an aromatic polyester-based resin for powder additive manufacturing, which has excellent pulverizability during powder production, a specific particle size distribution, and excellent flowability, spreadability and printability during powder additive manufacturing. According to the present invention, it is also possible to provide a three-dimensional modeled article made from this powder for powder additive manufacturing with excellent three-dimensional modeling accuracy.

< Reason why the present invention is effective>

The reason why the present invention achieves the above effect is not yet clear, but the following reasons can be inferred.

That is, the powder for the powder additive manufacturing of the present invention is possible to improve the pulverizability by brittle fracture at the time of powder production by adjusting the value of the 50% impact brittleness temperature of the resin composition containing the aromatic polyester-based resin within a specific range. Moreover, the powder obtained by the present invention can have a relatively sharp and specific particle size distribution. Therefore, it has excellent fluidity and spreadability during three-dimensional modeling by the powder additive manufacturing, and can form a homogeneous powder layer with uniform thickness and no defects. By irradiating such a powder layer with a heating medium such as a laser, a uniform molten state can be obtained, and it can be inferred that a desired three-dimensional modeled article can be manufactured with high accuracy.

Description of Embodiments

Hereinafter, the embodiments for carrying out the present invention will be described in detail. The following embodiments are exemplifications for explaining the present invention, and are not intended to limit the present invention to the following contents. The present invention can be carried out with various modifications within the scope of its gist.

<Resin Composition>

The resin composition (hereinafter sometimes referred to as "resin composition of the present invention") used for the powder for powder additive manufacturing of the present invention (hereinafter sometimes referred to as "powder of the present invention") contains an aromatic polyester-based resin, and a 50% impactbrittleness temperature of the resin composition (hereinafter sometimes simply referred to as "50% impact brittleness temperature") measured by the brittleness temperature test described in JIS K7216 at a holding time of 3 minutes, a temperature ticking interval of 5°C, and a temperature range of -70°C to 25° is in a range of -45°C or higher and 10°C or lower.

The resin composition of the present invention may contain resins other than the aromatic polyester-based resin, additives, reinforcing materials, etc., to the extent that the effects of the present invention are not impaired.

<Pulverizability of Resin Composition>

(50% impact brittleness temperature)

From the viewpoint of productivity during pulverization, the 50% impact brittleness temperature of the resin composition of the present invention is preferably 10°C or lower, more preferably 8°C or lower, even more preferably 6°C or lower, particularly preferably 4°C or lower, and most preferably 2°C or lower. In addition, from the viewpoint of the particle size and particle size distribution of the pulverized product, the 50% impact brittleness temperature is preferably -45°C or higher, more preferably -43°C or higher, even more preferably -42°C or higher, particularly preferably -41°C or higher, and most preferably -40°C or higher.

The brittleness temperature is the temperature at which a plastic or other material loses its plasticity and ductility when cooled, and its strength against mechanical impact decreases, making it susceptible to destruction. The temperature at which 50% of the test piece breaks is called the 50% impact brittleness temperature. It is known that the brittleness temperature is lowered by adding a plasticizer or the like. The 50% impact brittleness temperature also varies depending on the crystallinity and molecular weight of the material.

In particular, the crystallinity of the material is said to have a significant effect. In general, it is known that amorphous resins are superior in impact resistance of polymeric materials such as plastics. The aromatic polyester-based resin used in the present invention is a crystalline resin, and its crystallinity changes depending on its composition and molecular weight. The crystallinity of a material can be represented, for example, by the heat of crystal melting $\Delta Hm$ in differential scanning calorimetry (hereinafter referred to as DSC) or the half width with respect to the crystal melting peak height.

<Thermal Properties of the Resin Composition>

(Crystal melting temperature)

The crystal melting temperature (Tm) of the resin composition of the present invention measured at a heating rate of 10°C/min in differential scanning calorimetry is preferably 170°C or higher, more preferably 180°C or higher, even more preferably 185°C or higher, and most preferably 190°C or higher, from the viewpoint of heat resistance. Although the upper limit of the crystal melting temperature (Tm) is not particularly limited, it is preferably 280°C or lower, more preferably 255°C or lower, even more preferably 220°C, particularly preferably 195°C or lower, and most preferably 195°C or lower, from the viewpoint of easy modeling with a general-purpose three-dimensional printer.

The crystal melting temperature (Tm) of the resin composition is measured by the method described in the Examples section below.

(Difference between crystal melting temperature and cooling crystallization temperature)

When the resin composition is heated up to 30°C higher than the crystalline melting temperature (Tm) with a differential scanning calorimeter at a heating rate of 10°C/min and the temperature of the peak crystallization at a cooling rate of 10°C/min is set as the cooling crystallization temperature (Tc), the difference (Tm-Tc) between the crystal melting temperature (Tm) and the cooling crystallization temperature (Tc) of the resin composition of the present invention is preferably 30°C or higher or 90°C or lower, more preferably 40°C or higher or 80°C or lower, and even more preferably 45°C or higher or 70°C or lower, from the viewpoint of printability in three-dimensional modeling.

If the difference (Tm-Tc) between the crystal melting temperature (Tm) and the cooling crystallization temperature (Tc) is 30°C or higher, the crystallization of the resin composition is not too fast, and the warping of the modeled article in three-dimensional modeling can be suppressed. Therefore, since each layer of the modeled article is formed uniformly, the interlayer adhesive strength is less likely to decrease, and the appearance and strength of the modeled article are improved.

On the other hand, if the difference (Tm-Tc) between the crystal melting temperature (Tm) and the cooling crystallization temperature (Tc) is 90°C or lower, the crystallization rate is not too slow. Therefore, it is possible to complete the crystallization during the cooling process after three-dimensional modeling and obtain a modeled article having excellent heat resistance. In addition, the printing conditions can be easily optimized, and printability can be maintained in the three-dimensional modeling in which temperature is article set to a cooling crystallization temperature or higher and a crystal melting temperature or lower.

The difference (Tm-Tc) between the crystalline melting temperature (Tm) and the cooling crystallization temperature (Tc) of the resin composition is measured by the method described in the Examples section below.

(Heat of crystallization)

From the viewpoint of printability, the heat of crystallization (ΔHc) of the resin composition of the present invention measured by differential scanning calorimetry at a temperature reduction rate of 10°C/min is preferably 70 J/g or less, more preferably 60 J/g or less, even more preferably 55 J/g or less, particularly preferably 50 J/g or less, and most preferably 45 J/g or less. From the viewpoint of heat resistance, the heat of crystallization (ΔHc) is preferably 10 J/g or more, more preferably 15 J/g or more, even more preferably 20 J/g or more, particularly preferably 25 J/g or more, and most preferably 30 J/g or more.

The heat of crystallization (ΔHc) of the resin composition is measured by the method described in the Examples section below.

(Amount of terminal carboxyl groups)

When the resin composition of the present invention contains terminal carboxyl groups, the amount of terminal carboxyl groups in the resin composition of the present invention is preferably 40 equivalents/ton or less, more preferably 38 equivalents/ton or less, and even more preferably 36 equivalents/ton or less from the viewpoint of suppressing gas generation during printing. From the viewpoint of printability, the amount of terminal carboxyl groups is preferably 10 equivalents/ton or more, more preferably 12 equivalents/ton or more, and even more preferably 15 equivalents/ton or more.

When the resin composition of the present invention contains two or more resins, it is the amount of terminal carboxyl groups in the mixture.

The amount of terminal carboxyl groups in the resin composition is measured by the method described in the Examples section below.

(Melting peak half width in DSC chart)

The melting peak half width in the DSC chart of the resin composition of the present invention is preferably 40°C or lower, more preferably 30°C or lower, and even more preferably 20°C or lower from the viewpoint of printability. From the viewpoint of pulverization at the time of powder production, the melting peak half width is preferably more than 10°C, more preferably 11°C or higher, and even more preferably 12°C or higher.
The melting peak half width of the resin composition is measured by the method described in the Examples section below.

(Glass transition temperature (Tg))

The glass transition temperature (Tg) of the resin composition of the present invention is preferably 50°C or lower, more preferably 45°C or lower, even more preferably less than 44°C, and particularly preferably 43°C or lower from the viewpoint of printability. From the viewpoint of heat resistance, the glass transition temperature is preferably 20°C or higher, more preferably 22°C or higher, and even more preferably 25°C or higher.
The glass transition temperature of the resin composition is measured by the method described in the Examples section below.

(Intrinsic viscosity)

The intrinsic viscosity (Iv) of the resin composition of the present invention is preferably 2.0 dl/g or less, more preferably 1.8 dl/g or less, even more preferably 1.7 dl/g or less, particularly preferably 1.5 dl/g or less and most preferably 1.3 dl/g or less from the viewpoint of printability. Further, from the viewpoint of mechanical strength, the intrinsic viscosity (Iv) is preferably 0.5 dl/g or more, more preferably 0.6 dl/g or more, even more preferably 0.7 dl/g or more, particularly preferably 0.8 dl/g or more, and most preferably 0.85 dl/g or more.
The intrinsic viscosity (Iv) of the resin composition is a value measured at 30°C in a 1:1 (mass ratio) mixed solvent of tetrachloroethane and phenol.

<Aromatic polyester-based resin>

As the aromatic polyester-based resin contained in the resin composition of the present invention (hereinafter sometimes referred to as "the aromatic polyester-based resin of the present invention"), any resin that is composed of condensation polymerization of an aromatic dicarboxylic acid component and a diol component is acceptable. Among them, the aromatic polyester-based resin of the present invention is preferably one in which one or both of the aromatic dicarboxylic acid component and the diol component are composed of a single compound.
Here, typical examples of the above "aromatic dicarboxylic acid component" include terephthalic acid, isophthalic acid, naphthalenedicarboxylic acid, etc. (or derivatives thereof may also be used.). Apart of terephthalic acid may be substituted with "other dicarboxylic acid components". Here, "other dicarboxylic acid components" include oxalic acid, malonic acid, succinic acid, adipic acid, azelaic acid, sebacic acid, neopentylic acid, isophthalic acid, naphthalenedicarboxylic acid, diphenyl ether dicarboxylic acid, and p-oxybenzoic acid, etc. (or derivatives thereof may be used). These may be one kind or a mixture of two or more kinds. The amount of other dicarboxylic acids to be substituted can also be selected as appropriate.
Typical examples of the above "diol component" include ethylene glycol, 1,2-propanediol, 1,3-butanediol, 1,4-butanediol, 1,5-pentanediol, 3-methylpentanediol, 1,3-hexanediol, 1,6-hexanediol, hydrogenated bisphenol A, diethylene glycol, 1,4-cyclohexanedimethanol, triethylene glycol, polyethylene glycol, dipropylene glycol, polypropylene glycol and polytetramethylene glycol. Among these, 1,4-butanediol is preferable from the viewpoint of formability of the resulting aromatic polyester-based resin.
That is, the aromatic polyester-based resins of the present invention are preferably those having a structural unit derived from 1,4-butanediol, and especially those having a structural unit derived from the terephthalic acid component and a structural unit derived from 1,4-butanediol.
Aromatic polyester-based resins may be copolymerized with trace amounts of trifunctional or higher carboxylic acid components such as trimellitic acid and pyromellitic acid and/or trifunctional or higher polyol components such as trimethylolpropane and pentaerythritol in order to improve physical properties such as adjusting crystallinity. As an aromatic polyester-based resin, a mixture of two or more aromatic polyesters may be used so that the pulverizability of the resin composition of the present invention is within the above range, or a mixture of the same resins having different degrees of polymerization may be used.
Specific examples of the aromatic polyester-based resin of the present invention include polyethylene terephthalate resin, polypropylene terephthalate resin, polybutylene terephthalate resin, polyethylene isophthalate resin, polyethylene naphthalate resin, polybutylene naphthalate resin and polytrimethylene terephthalate resin.

These aromatic polyester-based resins may be used alone or in combination of two or more.

From the viewpoint of being able to obtain the same thermal properties and mechanical properties as polyamide resins, among the aromatic polyester-based resins described above, polyethylene terephthalate resin, polypropylene terephthalate resin, polybutylene terephthalate resin is preferred, polyethylene terephthalate resin and polybutylene terephthalate resin are more preferred, and polybutylene terephthalate resin (hereinafter sometimes referred to as "polybutylene terephthalate") is particularly preferred for the aromatic polyester-based resin of the present invention.

Commercially available polybutylene terephthalate includes the "Novaduran (registered trademark)" series manufactured by Mitsubishi Engineering-Plastics Corporation.

(polybutylene terephthalate)

Polybutylene terephthalate has a structural unit derived from a terephthalic acid component and a structural unit derived from 1,4-butanediol. The polybutylene terephthalate used in the present invention may be a polybutylene terephthalate homopolymer composed only of structural unit derived from a terephthalic acid component and structural unit derived from 1,4-butanediol. It may be a polybutylene terephthalate copolymer containing a structural unit derived from a terephthalic acid component, a structural unit derived from 1,4-butanediol, and a structural unit other than the above. The polybutylene terephthalate used in the present invention is preferably polybutylene terephthalate copolymer from the viewpoint of pulverizability and printability.

The polybutylene terephthalate homopolymer in the present specification is one containing structural units other than a structural unit derived from a terephthalic acid component and a structural unit derived from 1,4-butanediol in an amount corresponding to impurities.

The polybutylene terephthalate copolymer includes a structural unit derived from a terephthalic acid component and a structural unit derived from 1,4-butanediol, and a structural unit derived from an another dicarboxylic acid component and/or a diol component. The polybutylene terephthalate copolymer is preferred, wherein the total of a structural unit derived from a terephthalic acid component, a structural unit derived from 1,4-butanediol, and a structural unit derived from the other dicarboxylic acid component and/or the diol component is 95 mol% or more.

In the polybutylene terephthalate used in the present invention, it is preferable that a structural unit derived from a terephthalic acid component and a structural unit derived from 1,4-butanediol form the main structural components in the polybutylene terephthalate. Specifically, it is preferable that more than 50 mol% of all structural units constituting polybutylene terephthalate are composed of the above two structural units. This ratio is more preferably 75 mol% or more, more preferably 80 mol% or more, even more preferably 85 mol% or more, and may be 88 mol% or more. The upper limit of this ratio is not particularly limited, and it may be 100 mol%, that is, polybutylene terephthalate, which is a homopolymer composed only of the above two structural units.

Copolymerization components other than the terephthalic acid component in the polybutylene terephthalate used in the present invention include dicarboxylic acid components such as isophthalic acid, naphthalene dicarboxylic acid, succinic acid and the like (or derivatives thereof). Copolymerization components of diol components other than 1,4-butanediol include ethylene glycol, diethylene glycol, 1,3-propanediol, 1,4-cyclohexanedimethanol, 2,4-diethyl-1,5-pentanediol, butylethylpropanediol, spiroglycol, tricyclodecanedimethanol, 9,9-bis[4-(2-hydroxyethoxy)phenyl]fluorene and the like. However, other copolymer components are not limited to these.

Among these other copolymerization components, isophthalic acid is particularly preferably used because it is industrially readily available and polymer production is easy. A plurality of these copolymer components can be used at the same time.

In the case of a polybutylene terephthalate copolymer containing a dicarboxylic acid component other than terephthalic acid as a copolymerization component, the content of the terephthalic acid component in 100 mol% of the total dicarboxylic acid component is preferably 65 mol% or more, more preferably 70 mol% or more, even more preferably 75 mol% or more. The upper limit of the content of the terephthalic acid component is preferably 95 mol% or less, more preferably 93 mol% or less, even more preferably 91 mol% or less. In the case of polybutylene terephthalate copolymer containing a dicarboxylic acid component other than terephthalic acid as a copolymerization component, the content ratio of the dicarboxylic acid component other than terephthalic acid (for example, isophthalic acid) in 100 mol% of the total dicarboxylic acid component is preferably 5 mol% or more, more preferably 7 mol% or more, and even more preferably 9 mol% or more. The upper limit of the content of the dicarboxylic acid (eg, isophthalic acid) component is preferably 35 mol% or less, more preferably 30 mol% or less, and even more preferably 25 mol% or less. Such a ratio tends to improve the heat resistance and also allow for the development of moderate crystallinity during printing.

In the polybutylene terephthalate copolymer, 98 mol% or more, more preferably 99 mol% or more, and even more preferably 100 mol% of the total dicarboxylic acid components are preferably composed of a terephthalic acid component and an isophthalic acid component.

<Other ingredients>

The resin composition of the present invention may contain resins other than the aromatic polyester-based resin of the present invention as long as the effects of the present invention are not impaired.

Other resins include polystyrene-based resin, polyvinyl chloride-based resin, polyvinylidene chloride-based resin, chlorinated polyethylene-based resin, polyester-based resin other than aromatic polyester-based resin such as polybutylene succinate-based resin, polycarbonate-based resin, polyamide-based resin, polyacetal-based resin, acrylic-based resin, ethylene vinyl acetate copolymers, polymethylpentene-based resin, polyvinyl alcohol-based resin, polyolefin-based resin such as polybutene-based resin, cyclic olefin-based resin, polylactic acid-based resin, polyacrylonitrile-based resin, polyethylene oxide-based resin, cellulose-based resin, polyimide-based resin, polyurethane-based resin, polyphenylene sulfide-based resin, polyphenylene ether-based resin, polyvinyl acetal-based resin, polybutadiene-based resin, polyamideimide-based resin, polyamide bismaleimide-based resin polyetherimide-based resin, polyetheretherketone-based resin, polyetherketone-based resin, polyethersulfone-based resin, polyketone-based resin, polysulfone-based resin, aramid-based resin, fluorine-based resin, and the like. These may be used alone or in combination of two or more. The blending amount of other resin is usually 50% by mass or less, and preferably 30% by mass or less of the total components.

In addition to the components described above, the resin composition of the present invention can appropriately contain commonly used additives within a range that does not significantly impair the effects of the present invention. The additive is added for the purpose of improving and adjusting the printability, the stability of the powder and the three-dimensional modeled article, and various physical properties of the three-dimensional modeled article. Examples of such additives include inorganic particles such as silica, alumina, and kaolin, organic particles such as acrylic-based resin particles and melamine-based resin particles, pigments such as titanium oxide and carbon black, flame retardants, weathering stabilizers, heat stabilizers, antistatic agents, melt viscosity modifiers, cross-linking agents, lubricants, nucleating agents, plasticizers, anti-aging agents, antioxidants, light stabilizers, UV absorbers, neutralizers, antifogging agents, antiblocking agents, slip agents, and colorants.

Flame retardants include nitrogen-based flame retardants such as melamine cyanurate, metal hydroxide flame retardants such as magnesium hydroxide and aluminum hydroxide, phosphorus-based flame retardants such as ammonium polyphosphate, melamine polyphosphate, metal phosphinate, red phosphorus, and halogenated flame retardants such as brominated polystyrene, brominated polyphenylene oxide, brominated polycarbonate, and brominated epoxy resin. Halogen-containing compounds have environmental concerns. Therefore, nitrogen-based flame retardants such as melamine cyanurate, metal hydroxide flame retardants such as magnesium hydroxide and aluminum hydroxide, phosphorus-based flame retardants such as ammonium polyphosphate, melamine polyphosphate, metal phosphinate, and red phosphorus are more preferred. From the viewpoint of the three-dimensional modeling principle of the powder additive manufacturing method, nitrogen-based flame retardants and phosphorus-based flame retardants are even more preferred as flame retardants. These may be used alone or in combination of two or more.

The content of these additives is not particularly specified, but from the viewpoint of the stability of the resulting powder for powder additive manufacturing and the three-dimensional modeled article, it is preferably 0.01 parts by mass or more, more preferably 0.05 parts by mass or more, even more preferably 0.08 parts by mass or more, and particularly preferably 0.1 parts by mass or more, with respect to the total 100 parts by mass of powder for powder additive manufacturing. From the viewpoint of suppressing the degradation of interlayer adhesion of the resulting three-dimensional modeled article, the upper limit of the content of the additive is preferably 30 parts by mass or less, more preferably 28 parts by mass or less, and even more preferably 25 parts by mass or less.

In addition to the components described above, the resin composition of the present invention or the powder of the present invention can appropriately contain reinforcing materials that are generally blended within a range that does not significantly impair the effects of the present invention. Specific examples of reinforcing materials include inorganic fillers and inorganic fibers. When the resin composition includes the reinforcing material, the reinforcing material can essentially maintain the shape of the three-dimensional modeled article throughout the processing during printing, and thus reduce the shrinkage of the modeled article. The use of the reinforcing material can also modify, for example, the plasticity and physical properties of the modeled article. Furthermore, the use of reinforcing materials can adjust not only the transparency and color of the modeled article, but also the magnetic or electrical properties of the modeled article.

Specific examples of inorganic fillers include calcium carbonate, zinc carbonate, magnesium oxide, calcium silicate, sodium aluminate, calcium aluminate, sodium aluminosilicate, magnesium silicate, potassium titanate, glass balloon, glass flake, glass powder, silicon carbide, silicon nitride, boron nitride, gypsum, calcined kaolin, zinc oxide, antimony trioxide, zeolite, hydrotalcite, wollastonite, silica, talc, metal powder, alumina, graphite, carbon black, and carbon nanotube.

Specific examples of inorganic fibers include glass cut fiber, glass milled fiber, glass fiber, gypsum whisker, metal fiber, metal whisker, ceramic whisker, carbon fiber, and cellulose nanofiber.

These may be used alone or in combination of two or more.

The content of the reinforcing material is not particularly specified, but from the viewpoint of the strength of the three-dimensional modeled article obtained, it is preferably 1% by mass or more, more preferably 5% by mass or more, and even more preferably 10% by mass or more with respect to 100% of total mass of the powder for powder additive manufacturing. In addition, from the viewpoint of suppressing a decrease in the interlayer adhesion of the three-dimensional modeled article to be obtained, the content is preferably 50% by mass or less, more preferably 40% by mass or less, and even more preferably 30% by mass or less.

<Method for producing resin composition>

The method for producing the resin composition of the present invention containing the aromatic polyester-based resin and the above-mentioned other components that are used as necessary is not particularly limited as long as it contains each component. For example, the aromatic polyester-based resin and other components such as additives to be blended as necessary are premixed using various mixers such as a tumbler and a Henschel mixer. The resin composition of the present invention can be produced by followed melt-kneading using a Banbury mixer, a roll, a Brabender, a single-screw kneading extruder, a twin-screw kneading extruder, a kneader, or the like.

Inorganic particles, organic particles, and reinforcing materials may be blended into a powder mixture by mixing with the powder produced by the method described below, without kneading with the aromatic polyester-based resin, additives, and the like.

<Method for producing powder for powder additive manufacturing>

Powderization means for producing the powder of the present invention include a melt granulation method in which the resin composition of the present invention melted near its melting point is made into fibers and then cut, and pulverization method in which the resin composition of the present invention is cut or broken by applying impact or shear. In order to improve the spreadability of powder in powder additive manufacturing, it is preferable that the powder does not contain fine powder of around 10 $\mu$m and that the powder has a certain particle size and particle size distribution. Therefore, it is preferable to select a suitable powder method to obtain such a suitably shaped powder.

Examples of pulverizing means that can be employed include stamp mills, ring mills, mill stones, mortars, roller mills, jet mills, high-speed rotating mills, hammer mills, pin mills, container-driven mills, disc mills, media agitating mills, and the like.

In order to prevent stretching of the resin material due to shearing heat generated during pulverization, there is a technique where the resin temperature during pulverization is lowered by cooling the system using liquid nitrogen, etc., and the powder is produced by brittle fracture instead of ductile fracture. This is called low-temperature pulverization or freeze pulverization.

Among the above pulverization means, it is preferable to employ a high-speed rotary mill, which can obtain powders with a particle size distribution and shape suitable for powder additive manufacturing, because the fluidity of the powder obtained and the powder applyability (spreadability) during printing are better. It is also preferable to prepare the powder by brittle fracture of the resin material by freeze pulverization using liquid nitrogen in order to suppress changes in the physical properties and color of the resin material due to pulverization.

From the viewpoint of removing the stretched powder from the pulverized powder to increase the circularity and from the viewpoint of removing the fine powder to prevent the powder from rising up during handling, it is preferable to perform a classification step after pulverization. In this case, the classification method includes wind classification, sieve classification, and the like.

The resulting powder may be mixed with the aforementioned inorganic particles and reinforcing materials as needed.

For example, a powder mixture obtained by mixing one or more kinds of inorganic particles such as fumed silica, alumina, and magnesium oxide as a flow aid to the powder obtained by pulverizing the resin composition of the present invention may be used as the powder for powder additive manufacturing. In this case, it is preferable to use the inorganic particles as a flow aid in an amount of 0.05 to 5.0 parts by mass, particularly 0.1 to 1.0 parts by mass, for 100 parts by mass of the pulverized powder of the resin composition, in order to achieve both printability and flowability improvement effects. The inorganic particles to be used are hard and preferably have an average particle diameter of about 10 to 200 nm as measured by a laser diffraction method from the viewpoint of contributing to improvement in strength and imparting fluidity.

Furthermore, the powder obtained by pulverizing the resin composition of the present invention may be used as a powder mixture in which the powder is mixed as needed with one or more conductive powders such as carbon powder, infrared absorbers such as ITO ( Indium Tin Oxide) and ATO (Antimony Tin Oxide); cyanine dyes; phthalocyanine dyes with aluminum or zinc at the center; various naphthalocyanine compounds; nickel dithiolene complexes with a planar tetracoordination structure; squalium dyes; quinone compounds; diimonium compounds; infrared absorbing dyes such as azo compounds; etc. are mixed as the electromagnetic wave absorber in order to efficiently raise the temperature of the powder by absorbing the energy of a laser, an infrared lamp, etc. irradiated in the process of forming a modeled article layer in which the powder material is melted and bonded as described later. In this case, it is preferable from the viewpoint of printability that the conductive powder as the electromagnetic wave absorber is used in an amount of 0.1 to 10 parts by mass, particularly 0.3 to 5.0 parts by mass with respect to 100 parts by mass of the pulverized powder of the resin composition. The conductive powder to be used preferably has an average particle size of 0.1 to 15 μm as measured by a dynamic light scattering method from the viewpoint of miscibility with the pulverized powder of the resin composition and the viewpoint of heat transfer to the pulverized powder of the resin composition.

<Physical properties of powder for powder additive manufacturing>

(D50)

In the particle size distribution of the powder of the present invention, D50, which accounts for 50% by volume of the particle size distribution of the powder, is preferably 20 μm or more, more preferably 35 μm or more, and even more preferably 30 μm or more, still more preferably 40 μm or more, particularly preferably 50 μm or more, most preferably 55 μm or more, and preferably 100 μm or less, more preferably 80 μm or less, even more preferably 75 μm or less, particularly preferably 70 μm or less, from the viewpoint of applying the powder with a thickness within a predetermined range during printing.

The particle size distribution of the powder of the present invention is measured by the method described in the Examples section below.

(Flowability)

As the flowability of the powder of the present invention, the compression degree, which is the ratio (percentage) of the difference between the aerated bulk density and the packed bulk density to the packed bulk density, has no particular lower limit in terms of uniform powder filling during molding. The upper limit of the compression degree is preferably 33% or less, more preferably 31% or less, even more preferably 29% or less, particularly preferably 27% or less, and most preferably 25% or less.

The compression degree of the powder of the present invention is measured by the method described in the Examples section below.

(Spread rate)

The spread rate of the powder of the present invention is preferably 0.6 or more, more preferably 0.65 or more, and even more preferably 0.7 or more from the viewpoint of uniform powder filling at the time of printing. The upper limit of the spread rate is usually 1.0.

The spread rate of the powder of the present invention is measured by the method described in the Examples section below.

<Three-dimensional molded article>

The three-dimensional modeled article of the present invention is manufactured using the powder of the present invention.

The method for manufacturing a three-dimensional modeled article according to the present invention will be described below.

In the method of manufacturing a three-dimensional modeled article of the present invention, the powder of the present invention is used and a resin molded body is obtained by printing with a three-dimensional printer. Examples of printing methods using a three-dimensional printer include a material extrusion method (ME), a powder sintering method (PBF, SLS), an inkjet method, and a stereolithography method (SLA). In the present invention, it is particularly preferable to use the powder sintering method.

The method of manufacturing the three-dimensional modeled article of the present invention can be carried out according to a conventional method using a normal powder sintering apparatus.

The printing may be conducted by using the powder additive manufacturing apparatus. The apparatus includes, for example, a printing stage (printing table), a thin layer forming unit that forms a thin layer of a powder material on the printing stage; a heating unit that heats the formed thin layer typically by irradiating thereon laser light, so as to fuse particles of the powder material and to form a modeled article layer; an moving unit that moves the printing stage in the direction of stacking layers (vertical direction); and a control unit that controls these units to repeat thin layer formation, heating and shifting of the stage, thereby enabling stacking of the modeled article layers.

For example, in the case of laser heating, printing can be performed through the following steps (1) to (4) using this powder additive manufacturing apparatus.

(1) Step of forming a thin layer of the powder material, that is, the powder of the present invention;

(2) Step of selectively irradiating laser light on the thin layer which is kept preheated, to form a modeled article layer made of fused powder material;

Alternatively, the preheated thin layer may be selectively sprayed with a melt accelerator (a component that accelerates melt of resin) and a surface decorator (a component that forms outline of the layer) on the preheated thin layer, and then the whole is irradiated with an infrared lamp, a xenon lamp, a halogen lamp or the like, form a printed layer in which the powder material is melted and bonded.

(3) Step of moving down the printing stage by a distance equivalent to the thickness of modeled article layer thus formed;

(4) Step of repeating steps (1) to (3) in this order multiple times, to stack the modeled article layers.

In step (1), a thin layer of a powder material is formed. For example, the powder material fed from a powder feeding unit is spread flat over the printing stage with use of a recoater (blade or roll). The thin layer is formed directly on the printing stage, or in contact with the powder material having already been spread, or in contact with the modeled article layer having already been formed.

Thickness of the thin layer may be determined depending on the thickness of the modeled article layer. The thickness of the thin layer can be arbitrarily set according to the accuracy of the three-dimensional modeled article to be manufactured. The thickness of the thin layer (lamination pitch) is usually around 0.01 to 0.3 mm.

In step (2), laser is selectively irradiated on a point on the thus formed thin layer where the modeled article layer needs to be formed, so as to melt and fuse the powder material at the irradiated point. This makes the adjoining powder material fuse to form a fused body which constitutes the modeled article layer. In this process, since the powder material energized by the laser can also fuse with the layer having already been formed, thus also causing adhesion of adjoining layers. The powder material not irradiated by the laser is collected as excessive powder, and recycled as recovered powder.

Instead of selectively irradiating the laser, step (2) may alternatively be conducted by selectively spraying a melt accelerator (component that accelerates melt of resin) and a surface decorator (component that forms outline of the layer), and by irradiating the entire range with an infrared lamp, xenon lamp, halogen lamp or the like, to thereby melt and fuse the powder material. Similarly to the case of using laser, the powder material not consumed for melting and fusion is collected as excessive powder, and recycled as recovered powder.

In step (3), the printing stage is moved down by a distance equivalent to the thickness of the modeled article layer formed in step (2), and kept standby for the next step (1).

Temperature of a printing area in powder additive manufacturing is preferably about 5 to 20°C lower than the melting point of the resin composition to be employed. The printing time varies depending on the size of the modeled article.

Example

The present invention will be described in more detail below with reference to examples. The present invention is not limited to the following examples as long as the gist thereof is not exceeded.

<Methods for measuring physical properties of resin composition>

(50% impact brittleness temperature)

Pellets of each resin composition were injection molded, annealed by heat treatment, and then made into test pieces for measurement. According to the brittleness temperature test described in JIS K7216, the value of the 50% impact brittleness temperature measured at a holding time of 3 minutes, a temperature ticking interval of 5°C, and a temperature range of -70°C to 25°C was obtained. Samples for brittleness temperature testing were prepared by injection molding and crystallized by thermal annealing.

(Amount of terminal carboxyl groups)

After pulverizing the pellets of each resin composition for this measurement, they were dried at 120°C for 15 minutes using a hot air dryer, cooled to room temperature in a desiccator, and used as samples. 0.1 g of this sample was precisely weighed and collected in a test tube. 3 mL of benzyl alcohol was added to this test tube and dissolved at 195°C for 3 minutes while blowing dry nitrogen gas. Then, 5 mL of chloroform was gradually added and cooled to room temperature. To the solution, 1 or 2 drops of phenol red indicator was added and, the content was kept stirred under blowing of dry nitrogen gas, and titrated with a 0.1 N sodium hydroxide solution in benzyl alcohol, which was terminated upon change of color from yellow to red. A blank was also prepared by the same operations but without dissolving the resin composition, and the amount of terminal carboxyl groups was calculated according to the following formula (I).

$$\text{Amount of terminal carboxyl (equivalent/ton)} = (a\text{-}b) \times 0.1 \times f/w \ \ldots(I)$$

Where, "a" represents volume of a 0.1 N sodium hydroxide solution in benzyl alcohol ($\mu$L) required for titration, "b" represents volume of a 0.1 N sodium hydroxide solution in benzyl alcohol ($\mu$L) required for titrating the blank, w represents the amount of polyester sample (g), and f represents titer of a 0.1 N sodium hydroxide solution in benzyl alcohol.
The titer (f) of a 0.1 N sodium hydroxide solution in benzyl alcohol was determined by a method below.
5 mL of methanol was sampled in a test tube, 1 or 2 drops of phenol red solution in ethanol was added as an indicator, and the content was titrated to a point of color change with 0.4 mL of a 0.1 N sodium hydroxide solution in benzyl alcohol. Next, 0.2 mL of an aqueous 0.1 N hydrochloric acid solution with a known titer was sampled and added as a standard solution, and the content was titrated again to a point of color change with a 0.1 N sodium hydroxide solution in benzyl alcohol (All operations were conducted under blowing of dry nitrogen gas.). The titer (f) can be calculated by the following formula (II). Titer (f)=Titer of 0.1 N aqueous hydrochloric acid solution$\times$sampled volume of 0.1 N aqueous hydrochloric acid solution ($\mu$L)/Titration volume of 0.1 N sodium hydroxide solution in benzyl alcohol solution ($\mu$L) ...(II)

(Melting peak half width in DSC chart)

Using a differential scanning calorimeter manufactured by Perkin Elmer Co., Ltd., trade name "Pyris1 DSC" and in accordance with JIS K7122, about 10 mg of pellet sample of each resin composition was heated from room temperature to the crystal melting temperature (melting point Tm) +20°C at a heating rate of 10°C/min under a nitrogen atmosphere, and the DSC curve obtained in the first heating measurement was analyzed. The temperature at the apex of the endothermic peak was defined as the melting point, and the straight line connecting the start point of the endothermic peak rise and the end point of the endothermic peak fall was used as the baseline. The width of the endothermic peak at the midpoint of the vertical line segment drawn from the endothermic peak to the baseline was defined as the half width. Each value is rounded off to the first decimal place.

(Glass transition temperature (Tg))

Using the pellets of each resin composition, a sheet having a thickness of 1 mm was produced by heat transfer pressing at a resin temperature of 220°C. The obtained sheet was measured using a viscoelastic spectrometer "DVA-200" (manufactured by IT Measurement & Control Co., Ltd.) in measurement mode: Dynamic Temp Sweep, frequency: 1 Hz, temperature: 0 to 250°C (3°C/min. ), strain: 0.1%, and the obtained tan $\delta$ peak was taken as the glass transition temperature.

(Crystal melting temperature (Tm))

Using a differential scanning calorimeter manufactured by PerkinElmer Co., Ltd., trade name "Pyris1 DSC" and in accordance with JIS K7121, about 10 mg of a powder sample obtained by freezing and pulverizing each resin composition was heated from room temperature to the crystal melting temperature (melting point Tm) + 20°C at a heating rate of 10°C/min, held at this temperature for 1 minute, cooled to 30°C at a cooling rate of 10°C/min. and then, the temperature was raised to 280°C at a heating rate of 10°C/min. again, whereby a thermogram was measured. The peak top obtained from the thermogram was determined as the crystal melting temperature (melting point Tm) (°C) (reheating process). Each value was rounded off to the first decimal place.

(Difference between crystal melting temperature and cooling crystallization temperature (Tm-Tc))

Using a differential scanning calorimeter manufactured by PerkinElmer Co., Ltd., trade name "Pyris1 DSC" and in accordance with JIS K7121, about 10 mg of a powder sample obtained by freezing and pulverizing each resin composition was heated from room temperature to the crystal melting temperature (melting point Tm) + 20°C at a heating rate of 10 °C/min., held at this temperature for 1 minute, cooled to 30°C at a cooling rate of 10°C/min. and then, the temperature was raised to 280°C at a heating rate of 10°C/min. again, whereby a thermogram was obtained. The crystallization temperature (Tc) (°C) (cooling process) and the crystal melting temperature (melting point Tm) (°C) (reheating process) were obtained from the thermogram, and the difference was calculated. Each value was rounded off to the first decimal place.

(Heat of crystallization (ΔHc))

Using a differential scanning calorimeter manufactured by PerkinElmer Co., Ltd., trade name "Pyris1 DSC" and in accordance with JIS K7121, about 10 mg of a powder sample obtained by freezing and pulverizing each resin composition was heated from room temperature to the crystal melting temperature (melting point Tm) + 20°C at a heating rate of 10 °C/min., held at this temperature for 1 minute, and then the temperature was lowered to 30°C at a cooling rate of 10°C/min. whereby a thermogram was obtained. The heat of crystallization (ΔHc) (cooling process) was obtained from the thermogram. Each value was rounded off to the second decimal place.

<Powder evaluation methods>

(D50)

5 g of powder obtained by freezing and pulverizing each resin composition was weighed, and the particle size distribution (volume basis) of the powder was measured with a particle size distribution measuring device (Horiba, Ltd., LA-960). A particle size D50 located at 50% of the powder frequency distribution was determined from the detected particle size distribution, and the particle size was evaluated according to the following criteria.

AA: 50 μm or less
A: more than 50 μm and 100 μm or less
B: more than 100 μm

(Pulverizability)

Each resin composition was cooled to -100°C to -80°C using liquid nitrogen, and pulverized by impact pulverization using a hammer mill at a pulverization capacity of about 120 kg/h to produce a powder having a D50 of 50 μm. The amount of the obtained powder was calculated as a percentage (%) with respect to the obtained powder and the unpulverized product, and the grindability was evaluated according to the following criteria.

AA: The amount of powder obtained was 50% or more, and the load on the mill during pulverizing was low
A: The amount of powder obtained was 50% or more
B: The amount of powder obtained was less than 50%, or D50 was 100 μm or more

(Flowability)

The bulk density of the powder of each resin composition frozen and pulverized was measured using the Powder Tester PT-X manufactured by Hosokawa Corporation. The compression degree (%) was calculated from the obtained values of aerated bulk density and packed bulk density according to the following formula (III), and flowability was evaluated according to the following criteria. The packed bulk density was measured under conditions of a stroke height of 18 mm and tapping times of 180 times.

$$\text{Compression degree (\%)} = (\text{packed bulk density - aerated bulk density}) / \text{packed bulk density} \times 100 \qquad \cdots (\text{III})$$

A: Compression degree is 25% or less
B: Compression degree is more than 25%

(Spreading rate)

After placing 0.3 g of a mixture of powder of each resin composition frozen and pulverized and a flow aid in the recess of a table having a recess of 25 mm × 30 mm in size and 0.2 mm in depth, the mixture in the recess was smoothed by rolling a roller on the table at a speed of about 64 mm/sec. The spreading ratio was calculated as the ratio of the area of the mixture with respect to the area of the concave. The spreading rate was evaluated according to the following criteria.

AA: 70% or more
A: 50% or more and less than 70%
B: less than 50%

<Printing evaluation methods>

(Printability)

Using a powder bed fusion type printer, Lisa Pro (manufactured by Sinterit), the printing area (Print bed) was set at 175°C, the material supply unit (Feed bed) was set at 135°C, and the temperature of the cylinder and piston was set at 150°C. A 1BA type tensile test piece conforming to JIS K7161 was produced under the condition of a lamination pitch of 0.125 mm. The presence or absence of molding defects of the test piece was determined by observing the appearance. Modability was evaluated according to the following criteria.

AA: Printing is possible. Mechanical properties can be evaluated with the obtained sample.
A: Printing is possible, but it is very fragile, or the printing accuracy is low, such as the modeled article is rounder than the shape of the printing data.
B: Cannot be printed

(Mechanical property of modeled articles)

Using the 1BA tensile test piece produced as described above, a tensile test was performed at an initial distance between chucks of 45 mm, a speed of 50 mm/min, and 23°C, and the mechanical property of the modeled article were evaluated according to the following criteria.

AA: 30 MPa or more
A: less than 30 MPa
B: Not measurable

(Comprehensive evaluation)

Based on the results of the above pulverizability evaluation, flowability evaluation, spreadability evaluation, printability evaluation, and mechanical property evaluation, comprehensive evaluation was made according to the following criteria.

AA: Any four or more are "AA". However, none of them are "B".
A: Any one or more is "AA". However, none of them are "B".
B: Either one is "B".

[Example 1]

Polybutylene terephthalate (A-1) (Tm: 195°C, ΔHc: 34.6 J / g, 50% brittleness temperature: -39°C, other physical properties are shown in Table 1) was pulverized by freeze-pulverizing using liquid nitrogen and high-speed rotary pulverizing.

Using the obtained polybutylene terephthalate powder, D50 measurement and evaluation of pulverizability and flowability were performed.

In addition, using a mixture of 100 parts by mass of pulverized powder of polybutylene terephthalate and 0.3 parts by mass of alumina particles (Alu CRK, manufactured by AEROSIL, average particle size of 20 nm) as a flow aid, the spreadability was evaluated.

Furthermore, in addition to the flow aid, carbon powder (fine powder SGP-10, manufactured by SEC Carbon, average particle size 10 μm) as an electromagnetic wave absorber was added in an amount of 0.3 parts by mass to 100 parts by mass of pulverized powder of polybutylene terephthalate, and the printability and the mechanical properties of the modeled article were evaluated using the added product.

Table-1 shows the evaluation results of the physical properties of polybutylene terephthalate (A-1), pulverizability, spreadability, and printability, etc.

Polybutylene terephthalate (A-1) is a copolymerized polybutylene terephthalate composed of a structural unit derived from terephthalic acid, a structural unit derived from 1,4-butanediol, and a structural unit derived from isophthalic acid. The content of isophthalic acid in 100 mol % of the total dicarboxylic acid component is 20 mol %.

[Example 2]

Powder preparation and various evaluations were performed in the same manner as in Example 1, except that polybutylene terephthalate (A-2) (Tm: 193°C, ΔHc: 34.4 J / g, 50% brittleness temperature: 0°C, other physical properties are shown in Table 1) was used instead of polybutylene terephthalate (A-1). The results are shown in Table-1.
Polybutylene terephthalate (A-2) is a copolymerized polybutylene terephthalate composed of a structural unit derived from terephthalic acid, a structural unit derived from 1,4-butanediol, and a structural unit derived from isophthalic acid. The content of isophthalic acid in 100 mol % of the total dicarboxylic acid component is 20 mol %.

[Example 3]

Powder preparation and various evaluations were performed in the same manner as in Example 1, except that polybutylene terephthalate (A-3) (Tm: 188°C, ΔHc: 35.0 J / g, 50% brittleness temperature: -11°C, other physical properties are shown in Table 1) obtained by adding 0.5% by mass of Adekastab AO-80 (manufactured by ADEKA) and 1.0% by mass of Adekastab PEP-36 (manufactured by ADEKA) to polybutylene terephthalate (A-1) and compounding was used instead of polybutylene terephthalate (A-1). The results are shown in Table-1.

[Comparative Example 1]

Powder preparation and various evaluations were performed in the same manner as in Example 1, except that polybutylene terephthalate (A-4) (Tm: 224°C, ΔHc: 45.6 J / g, 50% brittleness temperature: -50°C, other physical properties are shown in Table 1) was used instead of polybutylene terephthalate (A-1). The results are shown in Table-1.
Polybutylene terephthalate (A-4) is polybutylene terephthalate composed of a structural unit derived from terephthalic acid and a structural unit derived from 1,4-butanediol.

[Comparative Example 2]

Powder preparation and various evaluations were performed in the same manner as in Example 1, except that polybutylene terephthalate (A-5) (Tm: 185°C, ΔHc: 27.8 J / g, 50% brittleness temperature: 13°C, other physical properties are shown in Table 1) was used instead of polybutylene terephthalate (A-1). The results are shown in Table-1.
Polybutylene terephthalate (A-5) is a copolymerized polybutylene terephthalate composed of structural units derived from terephthalic acid, structural units derived from 1,4-butanediol, and structural units derived from isophthalic acid. The content of isophthalic acid in 100 mol % of the total dicarboxylic acid component is 24 mol %.

| | | | Example | | | Comparative Example | |
|---|---|---|---|---|---|---|---|
| (Part by mass) | | | 1 | 2 | 3 | 1 | 2 |
| Aromatic Polyester-based Resin (Part by mass) | | A-1 | 100 | | | | |
| | | A-2 | | 100 | | | |
| | | A-3 | | | 100 | | |
| | | A-4 | | | | 100 | |
| | | A-5 | | | | | 100 |
| Physical Properties of Resin Composition | | 50% Britteleness Temprature (°C) | -39 | 0 | -11 | -50 | 13 |
| | | Amount of Terminal Carboxy Groups (Equivalents/ton) | 15.3 | 35 | 15.3 | 20 | 51.9 |
| | | Melting Peak Half Width (°C) | 15 | 13 | 12 | 9 | 16 |
| | | Tg(°C) | 43 | 42 | 42 | 52 | 40 |
| | | Tm(°C) | 195 | 193 | 188 | 224 | 185 |
| | | Tm-Tc (°C) | 48 | 47 | 32 | 38 | 43 |
| | | Δ Hc (J/g) | 34.6 | 34.4 | 35.0 | 45.6 | 27.8 |

(continued)

| (Part by mass) | | Example | | | Comparative Example | |
|---|---|---|---|---|---|---|
| | | 1 | 2 | 3 | 1 | 2 |
| Powder Evaluation | D50 ($\mu$m) | AA | A | A | B | A |
| | Pulverizability | A | AA | A | B | B |
| | Flowability | A | A | A | A | B |
| | Spreadability | AA | A | AA | B | A |
| Modeling Evaluation | Printability | AA | AA | AA | B | A |
| | Mechanical Property | AA | AA | A | B | A |
| Comprehensive Evaluation | | AA | A | A | B | B |

As is clear from the above results, the powder for powder additive manufacturing of the present invention contains an aromatic polyester-based resin and uses a resin composition having a specific value of 50% impact brittleness temperature, so it can be produced with excellent pulverizing performance in low-temperature pulverization using liquid nitrogen. In addition, since the powder for powder additive manufacturing of the present invention has a particle size distribution within a predetermined range, the accuracy of the thickness of the powder layer when the powder is applied in the printing area and the filling rate of the powder into the recesses of the printing table are improved. Therefore, the powder has excellent uniformity when melting with a laser, infrared lamp, xenon lamp, halogen lamp, or the like. As a result, the desired three-dimensional modeled article can be manufactured with good printability and high accuracy.

Although the present invention has been described in detail using specific embodiments, it will be apparent to those skilled in the art that various modifications can be made without departing from the spirit and scope of the present invention.

This application is based on Japanese Patent Application 2021-076323 filed on April 28, 2021, the entirety of which is incorporated by reference.

**Claims**

1. A powder containing a resin composition for powder additive manufacturing,

   wherein the resin composition comprises an aromatic polyester-based resin; and
   a 50% impact brittleness temperature of the resin composition measured by the brittleness temperature test described in JIS K7216 at a holding time of 3 minutes, a temperature ticking interval of 5°C, and a temperature range of -70°C to 25° is in a range of -45°C or higher and 10°C or lower.

2. The powder for powder additive manufacturing according to claim 1, wherein the resin composition has a melting peak half width in a DSC chart more than 10°C.

3. The powder for powder additive manufacturing according to claim 1, wherein an amount of terminal carboxyl groups of the resin composition is 10 to 40 equivalents/ton.

4. The powder for powder additive manufacturing according to claim 1, wherein the resin composition has a glass transition temperature (Tg) of 20°C or higher and lower than 44°C.

5. The powder for powder additive manufacturing according to claim 1, wherein the powder contains inorganic particles.

6. The powder for additive manufacturing according to claim 1, wherein a particle size distribution D50 of the powder is 20 $\mu$m or more and 100 $\mu$m or less.

7. The powder for powder additive manufacturing according to claim 1, wherein the powder has a compression degree calculated by the following formula (III) of 25% or less;

$$\text{Compression degree (\%)} = \text{(packed bulk density - aerated bulk density)} / \text{packed bulk density} \times 100 \quad \dots \text{(III)}$$

wherein, in the formula (III), the aerated bulk density is a bulk density before compression, and the packed bulk density is a bulk density after compression at a stroke height of 18 mm and 180 tapping cycles.

8.  The powder for additive manufacturing according to claim 1, wherein the resin composition has a crystal melting temperature (Tm) of 200°C or lower.

9.  The powder for powder additive manufacturing according to claim 1, wherein the aromatic polyester-based resin has a structure derived from 1,4-butanediol.

10.  The powder for powder additive manufacturing according to claim 9, wherein the aromatic polyester-based resin includes a structural unit derived from a terephthalic acid component, a structural unit derived from 1,4-butanediol, and at least one other structural units.

11.  A three-dimensional modeled article printed using the powder for powder additive manufacturing according to any one of claims 1 to 10.

12.  A resin composition containing an aromatic polyester-based resin;
wherein a 50% impact brittleness temperature of the resin composition measured by the brittleness temperature test described in JIS K7216 at a holding time of 3 minutes, a temperature ticking interval of 5°C, and a temperature range of -70°C to 25° is in a range of -45°C or higher and 10°C or lower.

13.  The resin composition according to claim 12, wherein the resin composition has a resin composition has a melting peak half width in a DSC chart more than 10°C.

14.  The resin composition according to claim 12, wherein an amount of terminal carboxyl groups of the resin composition is 10 to 40 equivalents/ton.

15.  The resin composition according to claim 12, wherein the resin composition has a glass transition temperature (Tg) of 20°C or higher and lower than 44°C.

16.  The resin composition according to claim 12, wherein the resin composition has a crystal melting temperature (Tm) of 200°C or lower.

17.  The resin composition according to claim 12, wherein the aromatic polyester-based resin has a structure derived from 1,4-butanediol.

18.  The resin composition according to claim 17, wherein the aromatic polyester-based resin includes a structural unit derived from a terephthalic acid component, a structural unit derived from 1,4-butanediol, and at least one other structural units.

<table>
<tr><td colspan="2" align="center">**INTERNATIONAL SEARCH REPORT**</td><td colspan="2">International application No.<br><br>**PCT/JP2022/018723**</td></tr>
</table>

**A. CLASSIFICATION OF SUBJECT MATTER**

***B29D 29/10***(2006.01)i; ***B33Y 80/00***(2015.01)i; ***B29C 64/153***(2017.01)i; ***B33Y 70/00***(2020.01)i
FI:   B29C64/153; B29D29/10; B33Y70/00; B33Y80/00

According to International Patent Classification (IPC) or to both national classification and IPC

**B. FIELDS SEARCHED**

Minimum documentation searched (classification system followed by classification symbols)

B29D29/10; B33Y80/00; B29C64/153; B33Y70/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 9-40765 A (TEIJIN LTD.) 10 February 1997 (1997-02-10)<br>claim 1, paragraphs [0008]-[0010], [0032], tables 1, 2 | 12, 14-15, 17-18 |
| A | entire text | 1-11, 13, 16 |
| A | JP 2008-50583 A (TEIJIN LTD.) 06 March 2008 (2008-03-06)<br>entire text | 1-18 |

☐ Further documents are listed in the continuation of Box C.      ☑ See patent family annex.

| | | |
|---|---|---|
| * | Special categories of cited documents: | "T"   later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X"   document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&"   document member of the same patent family |
| "P" | document published prior to the international filing date but later than the priority date claimed | |

| Date of the actual completion of the international search | Date of mailing of the international search report |
|---|---|
| **08 June 2022** | **21 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/018723**

| Patent document cited in search report | | | Publication date (day/month/year) | Patent family member(s) | | | Publication date (day/month/year) |
|---|---|---|---|---|---|---|---|
| JP | 9-40765 | A | 10 February 1997 | US claims, tables 1, 2 | 5709916 | A | |
| JP | 2008-50583 | A | 06 March 2008 | US entire text | 2011/0160364 | A1 | |
| | | | | WO | 2008/013316 | A1 | |
| | | | | EP | 2053091 | A1 | |
| | | | | CA | 2660352 | A | |
| | | | | KR | 10-2009-0038883 | A | |
| | | | | CN | 101495569 | A | |
| | | | | NZ | 574558 | A | |
| | | | | AU | 2007277656 | A | |
| | | | | TW | 200827403 | A | |
| | | | | MX | 2009000988 | A | |
| | | | | BR | PI0715180 | A | |

Form PCT/ISA/210 (patent family annex) (January 2015)

**EP 4 331 820 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6399165 B

- JP 2021076323 A